# EUROPEAN PATENT APPLICATION

(11) **EP 4 664 959 A1**
(43) Date of publication of application: **17.12.2025**
(21) Application number: 23921164.2
(22) Date of filing: 09.02.2023
(51) Int. Cl.: H04W 16/02, H04W 16/20, H04W 88/10

(54) **COMMUNICATION DEVICE AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); OKANO, Mayuko, Tokyo 100-6150 (JP); KUMAGAI, Shinya, Tokyo 100-6150 (JP); NAGATA, Satoshi, Tokyo 100-6150 (JP); MIN, Tianyang, Tokyo 100-6150 (JP); MINOKUCHI, Atsushi, Tokyo 100-6150 (JP); DOJIRI, Shunsuke, Tokyo 100-6150 (JP)
(74) Representative: Hoffmann Eitle
(86) International application number: PCT/JP2023/004463
(87) International publication number: WO 2024/166333

(57) **Abstract**

A communication device performs a communication with a first communication network and a second communication network, and a radio communication with a terminal; and performs an optimization of a specific communication network based on configuration information or recommended information related to a configuration of the specific communication network to be constructed using the communication unit.

## Description

### TECHNICAL FIELD

The present disclosure relates to a communication device and a communication method capable of performing a radio communication with a terminal (User Equipment, UE).

### BACKGROUND ART

The 3rd Generation Partnership Project (3GPP: Registered Trademark) has prepared a specification for the 5th generation mobile communication system (which may be called 5G, New Radio (NR), or Next Generation (NG)), and is also in the process of specifying the next generation called Beyond 5G, 5G Evolution, or 6G.

For example, the White Paper related to 6G (Non-Patent Literature 1) discloses a more flexible network function deployment and the like regarding the network architecture.

### CITATION LIST

### NON-PATENT LITERATURE

[Non-Patent Literature 1] NTT DOCOMO, "DOCOMO 6G White Paper 5.0 Edition", [online], January 2023, Internet <URL:https://www.docomo.ne.jp/binary/pdf/corporate/techno logy/whitepaper_6g/DOCOMO_6G_White_PaperJP_20221116.pdf>

### SUMMARY OF INVENTION

In 6G, Network Controlled Access Point (NCAP, tentative name) is planned to be introduced as an access point (communication device) that can be installed under the control of a mobile communication network and controlled initiatively by a network operator as a form of the architecture of a mobile communication network.

In the mobile communication network including the NCAP (which may be called an NCAP network), a so-called SON (Self Organizing Networks) function, which is a self-optimization function of the network provided on the network operator side, is assumed to be used.

However, in the conventional SON function, after the radio base station (gNB) and the like are appropriately deployed (installed) on the network operator side, the configuration parameters and the like are adjusted according to the traffic conditions and the like. Therefore, it is not necessarily appropriate to apply such a conventional SON function to the NCAP which can be installed by a communication service subscriber and others.

Therefore, the following disclosure has been made in view of such a situation, and an object of the present disclosure is to provide a communication device and a communication method capable of realizing an appropriate self-optimization of an NCAP network.

An aspect of the present disclosure is a communication device (NCAP 100) including: a communication unit (first communication unit 110, second communication unit 120, third communication unit 130) that performs a communication with a first communication network and a second communication network, and a radio communication with a terminal (UE 200); and a control unit (control unit 140) that performs an optimization of a specific communication network based on configuration information or recommended information related to a configuration of the specific communication network to be constructed using the communication unit.

### BRIEF DESCRIPTION OF DRAWINGS

[FIG. 1] FIG. 1 is an overall schematic configuration diagram of a radio communication system 10.
[FIG. 2] FIG. 2 is a functional block configuration diagram of an NCAP 100.
[FIG. 3] FIG. 3 is a functional block configuration diagram of UE 200.
[FIG. 4] FIG. 4 is a diagram illustrating a deployment example (part 1) of C-plane function and U-plane function of CN in a mobile communication network configured using the NCAP 100.
[FIG. 5] FIG. 5 is a diagram illustrating a deployment example (part 2) of C-plane function and U-plane function of CN in a mobile communication network configured using the NCAP 100.
[FIG. 6] FIG. 6 is a diagram illustrating an example of a communication sequence related to an optimization of the NCAP network.
[FIG. 7] FIG. 7 is a diagram illustrating a hardware configuration example of the NCAP 100 and the UE 200.
[FIG. 8] FIG. 8 is a diagram illustrating a configuration example of a vehicle 2001.

### DESCRIPTION OF EMBODIMENT

An embodiment will be described below with reference to the drawings. Note that the same or similar reference numerals have been attached to the same functions and configurations, and a description thereof will be omitted as appropriate.

### (1) Overall schematic configuration of radio communication system

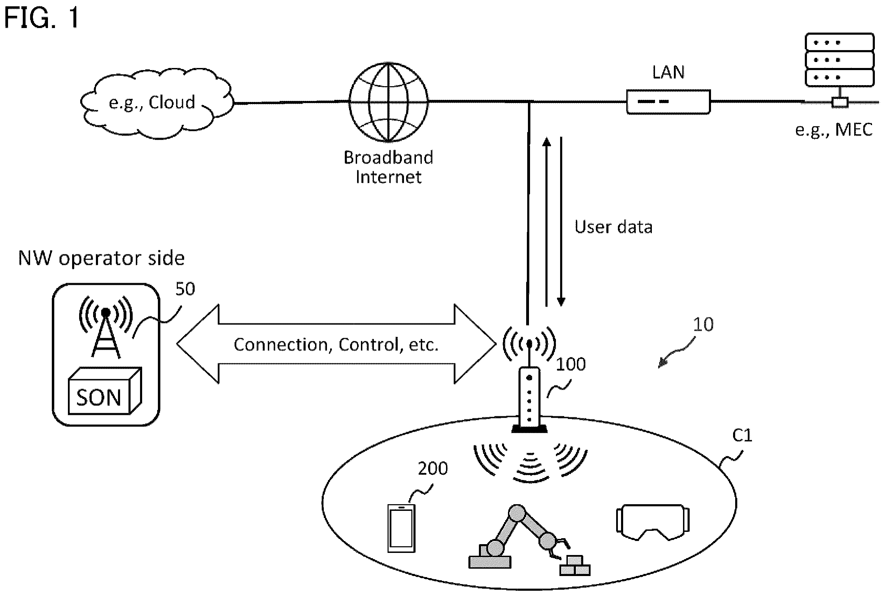

FIG. 1 is an overall schematic configuration diagram of a radio communication system 10 according to the present embodiment. The radio communication system 10 is a radio communication system according to a system called Beyond 5G, 5G Evolution or 6G (hereinafter, referred to as 6G), and includes a radio base station 50 (gNB 50) and a terminal 200 (UE 200, User Equipment, UE). The radio communication system 10 may be a radio communication system according to a specification other than 6G, such as 5G New Radio (NR).

The gNB 50 is a radio base station according to 6G, and performs a radio communication with the UE 200 according to 6G. The NCAP 100 and the UE 200 can support Massive MIMO (Multiple-Input Multiple-Output) that generates a beam BM with higher directivity by controlling radio signals transmitted from multiple antenna elements, carrier aggregation (CA) that uses multiple component carriers (CCs) bundled together, dual connectivity (DC) that performs a communication simultaneously between the UE and each of the two NG-RAN nodes, and the like.

The radio communication system 10 includes a Network Controlled Access Point 100 (hereinafter, NCAP 100) in addition to the gNB 50. The NCAP 100 is a type of communication device called an access point (AP) and can provide the same function as a radio base station. The NCAP is a tentative name and may be called by other similar names such as a communication node, a RAN node, or a relay device.

The NCAP 100 may be installed by an operating entity (which may be called a network operator or a mobile operator) of the radio communication system 10 (mobile communication system), or may be installed freely by a subscriber (Customer, Subscriber) to a communication service provided by the radio communication system 10.

Here, at least any of the frequency bands (which may include band combinations), the number of antenna beams, the number of MIMO layers, and the transmission power supported by the NCAP 100 may be limited more than the gNB 50. The NCAP 100 can provide functions almost similar to those of the gNB 50, and therefore can form the cell C1 and accommodate the UE 200.

The UE 200 is typically a mobile terminal such as a smartphone, and may also be a device for the Industrial Internet of Things (IIoT) or URLLC (Ultra-Reliable and Low Latency Communications).

The radio communication system 10 may include a radio access network (RAN) configured of multiple RAN nodes such as the gNB 50 using a 6G radio access technology (RAT), and a core network according to 6G. Here, the RAN and the core network may be simply referred to as a "network".

The core network (CN) may be connected to the RAN and is a network configured of switching equipment, subscriber information management devices, and the like. The UE 200 can communicate with the core network via the RAN.

In the radio communication system 10, a control plane (C-plane) function and a user plane (U-plane) function (UPF: User Plane Function) are defined.

The C-plane may mean a series of control processing exchanged mainly for establishing communication. The U-plane may mean the processing of transmitting and receiving user data.

In the core network (and some RANs), the concept of CUPS (Control and User Plane Separation) in which the functions of the C-plane and U-plane are clearly separated may be introduced.

The C-plane function of the core network may include an Access and Mobility Management Function (AMF) that provides access and mobility management functions for the UE 200, a Session Management Function (SMF) that provides session management functions, and the like. Here, the AMF and the SMF may be called by different names.

Connecting to the RAN, various controls, and the like may be performed from the network operator side to the NCAP 100 via the C-plane function. At least such connection and/or at least some of the controls may be implemented using the framework of self-organizing networks (SON). The SON may be interpreted as a self-optimizing function of the mobile communication network including automatic configuration, automatic optimization of parameters, and the like at the time of installation of the gNB 50.

The NCAP 100 can connect to the gNB 50 via the C-plane function in this way. The gNB 50 can connect to the NCAP 100 via the RAN (RAT) or a wired network. Further, the NCAP 100 can provide to the UE 200 via a local area network (LAN), a communication path to the broadband Internet and to a server for MEC (Multiaccess Edge Computing). The MEC is a mechanism for deploying servers, storage, and the like closer to the user (subscriber) in a mobile communication network. Furthermore, the NCAP 100 may be allowed to access various cloud services via the broadband Internet.

### (2) Functional block configuration of radio communication system

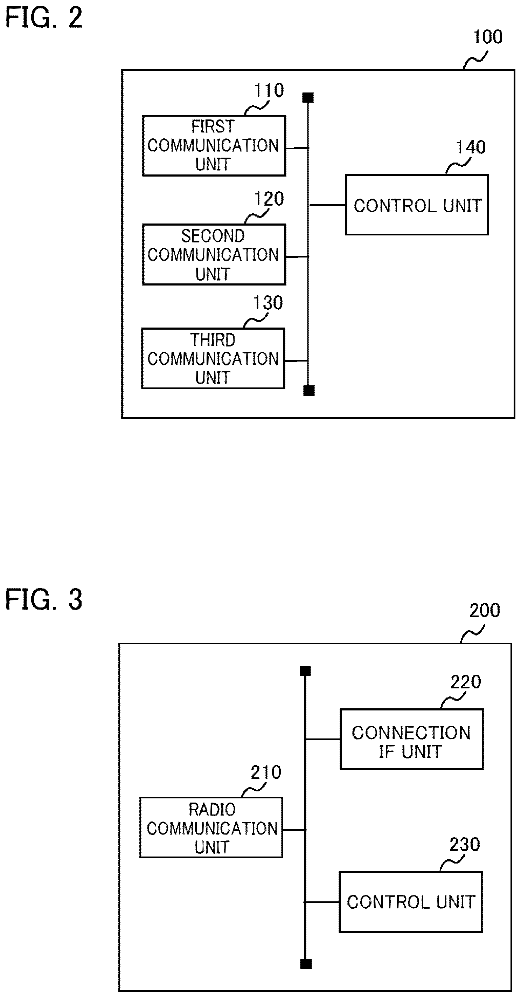

Next, a functional block configuration of the radio communication system 10 will be described. Specifically, the functional block configuration of the NCAP 100 and the UE 200 will be described. FIG. 2 is a functional block configuration diagram of the NCAP 100. FIG. 3 is a functional block configuration diagram of the UE 200.

### (2.1) NCAP 100

As illustrated in FIG. 2, the NCAP 100 includes a first communication unit 110, a second communication unit 120, a third communication unit 130, and a control unit 140.

The first communication unit 110 performs a communication with the network operator side. Specifically, the first communication unit 110 performs a communication with the RAN nodes including the gNB 50. A radio access technology (RAT) may be used for connection with the gNB 50 (and other RAN nodes), or a wired network other than the RAT may be used. The network on the network operator side constituted by the RAN nodes including the gNB 50 may be called a first communication network. In other words, the first communication unit 110 performs a communication with the first communication network using the RAT. The network on the network operator side may be simply called a network operator, or may be interpreted as a concept including the SON.

The second communication unit 120 performs a communication with the local area network (LAN) side. Specifically, the second communication unit 120 performs a communication via a communication device such as a router constituting the LAN, and the broadband Internet (which may be simply abbreviated as the Internet).

A wireless LAN such as Wi-Fi (registered trademark) or a wired LAN such as Ethernet (registered trademark) may be used for connection with the LAN. The network on the LAN side may be called a second communication network. In other words, the second communication unit 120 performs a communication with the second communication network using a LAN technology.

Further, the second communication unit 120 may perform a communication with the network operator side via the LAN (second communication network) and the broadband Internet. The communication may include a communication related to not only the U-plane function but also the C-plane function.

The third communication unit 130 performs a communication with the UE 200 side. Specifically, the third communication unit 130 performs a radio communication with the UE 200 using a radio access technology (RAT). In this case, the NCAP 100 may provide the same functions as the gNB 50 to the UE 200. In the present embodiment, the third communication unit 130 constitutes a communication unit that performs a radio communication with the UE 200.

The control unit 140 controls each functional block constituting the NCAP 100. In particular, in the present embodiment, the control unit 140 can control the behavior of the communication device of the NCAP 100. Specifically, the control unit 140 can perform an operation (hereinafter, specific operation) as a network device (NW device) in which the NCAP 100 accommodates the UE 200.

As long as the network device is a device that accommodates the UE 200 (intended to connect to UE 200 and perform a radio communication), the type of device is not particularly limited. Here, the network device such as a radio base station (gNB 50) may be intended, and the control unit 140 may perform a specific operation as a radio base station that accommodates the UE 200.

The control unit 140 can perform an optimization of the NCAP network based on information related to a specific communication network to be constructed using at least one of the first communication unit 110, the second communication unit 120, and third communication unit 130, specifically, related to a mobile communication network including the NCAP (which may be called an NCAP network).

The optimization of the NCAP network means to configure parameters related to the constituent elements of the NCAP network to suitable values according to the performance and environment required for the NCAP network, and in a broad sense, it may be interpreted as the same as a self-organizing function of the network (SON: Self Organizing Networks).

The control unit 140 can perform an optimization of the NCAP network based on configuration information or recommended information related to the configuration of the NCAP network. The configuration information may be interpreted as the information indicating values to be configured as parameters related to the constituent elements of the NCAP network. The recommended information may be a value (one value or more values) recommended as the parameter, and may be interpreted as the information that may be changed according to the measurement result or the like. The configuration information and recommended information may be configured in the NCAP 100 in advance, or may be notified to the NCAP 100 via the network on the network operator side or the network on the LAN side.

The control unit 140 may configure the constituent elements of the NCAP network based on values such as parameters indicated by the configuration information or the recommended information. The constituent elements of the NCAP network are not particularly limited.

Specifically, the control unit 140 can perform an optimization based on the configuration information or the recommended information related to the physical constituent elements in the NCAP network. Examples of the physical constituent elements include antenna-related parameters. The parameters of the physical constituent elements will be described later. In addition, non-physical constituent elements related to the NCAP network (various radio parameters, etc.) may be targeted.

The control unit 140 may perform an optimization based on the configuration information or the recommended information targeted for a single NCAP 100 or multiple NCAPs. Specifically, the control unit 140 may perform an optimization based on the configuration information or the recommended information targeted for only the NCAP 100 notified from the network on the network operator side (or the network on the LAN side), or the configuration information or the recommended information targeted for multiple NCAPs including the NCAP 100.

The control unit 140 may be assumed to receive the configuration information or the recommended information from the network on the network operator side (the first communication network) within a specific time after reporting the configuring information indicating the configuration of the NCAP network from the NCAP 100 or the UE 200. The configuring information indicating the configuration of the NCAP network may be the same parameters as the configuration information or the recommended information described above, and may mean values already configured for the constituent elements of the NCAP network.

Further, the control unit 140 may be assumed to receive the configuration information or the recommended information from the network on the network operator side within a specific time after requesting the configuration information or the recommended information from the NCAP 100 or the UE 200. If the control unit 140 cannot receive the configuration information or the recommended information within the specific time, the control unit 140 may request the configuration information or the recommended information again, or may report the configuring information again.

The control unit 140 may report the configuring information related to a changed constituent element to the network operator after changing the configuration associated with the optimization. Specifically, the control unit 140 may report the configuring information related to the changed constituent element within a specific time after changing the configuration. The configuring information may include only the changed constituent element, or may include parameters related to the constituent element.

The control unit 140 may perform a specific operation in at least any one of the C-plane of the NCAP 100 or the UE 200 regarding the CN and the U-plane of the UE 200 regarding the CN. The C-plane function and the U-plane function of the CN may include the following processing:
- C-plane function: device registration/connection, management/retention/processing related to subscribers, subscriber (terminal) authentication processing, billing-related control, mobility management, session management
- U-plane function: connection with an IP (Internet Protocol) network, authentication processing, routing of IP packets, priority control

### (2.2) UE 200

As illustrated in FIG. 3, the UE 200 includes a radio communication unit 210, a connection IF unit 220, and a control unit 230.

The radio communication unit 210 transmits and receives radio signals with the gNB 50 or NCAP 100 according to 6G. Specifically, the radio communication unit 210 transmits UL signals according to 6G and receives DL signals according to 6G. The radio communication unit 210 supports Massive MIMO, CA that uses multiple CCs bundled together, and DC that performs a communication simultaneously between the UE and each of the two NG-RAN Nodes, and the like.

The connection IF unit 220 can provide an interface (IF) function for connecting devices for IIoT or URLLC. The connection IF unit 220 is not essential, and may not be provided depending on the specifications of the UE 200. The IF provided by the connection IF unit 220 may be wired or radio.

The control unit 230 controls the radio communication unit 210 and the connection IF unit 220. In particular, in the present embodiment, when the NCAP 100 performs a specific operation (operation as a network device accommodating the UE 200) without performing a communication with the network operator side, the control unit 230 can connect to the NCAP 100.

Specifically, when the NCAP 100 performs a specific operation (may transmit a connection request before performing a specific operation), the control unit 230 can connect to the NCAP 100 and receive various communication services.

In addition, the control unit 230 may transmit a request for the configuration information or the recommended information related to a configuration of the NCAP network to the network operator (and the NCAP 100). For example, the control unit 230 may transmit the request when connecting to the NCAP 100.

### (3) Operation of radio communication system

Next, an operation of the radio communication system 10 will be described. Specifically, a description will be given of the operation related to self-optimization in the mobile communication network (NCAP network) including the NCAP 100.

### (3.1) Assumption

In the NCAP network, the self-optimization function of the network (equivalent to SON) provided on the network operator side is assumed to be used. Here, the SON may be called a similar name.

In the conventional SON function, after the radio base station (gNB) and the like are appropriately deployed (installed) on the network operator side, the configuration parameters and the like are adjusted according to the traffic conditions and the like. Therefore, it is not necessarily appropriate to apply such a conventional SON function to the NCAP which can be installed by a communication service subscriber and others.

In the following description, an operation example related to self (autonomous) optimization (SON) of the NCAP network (in a narrow sense, it can be interpreted as the NCAP itself or the NCAP concept) will be described. The control of the optimization may include the following phases. Here, these may be defined in other frameworks and are not limited to the SON function.
- (i) Information collection for optimization control
- (ii) Parameter configuration for optimization
- (iii) Control related to device installation for optimization

In the following description, the contents of (ii) and (iii) will be described in particular.

### (3.2) Operation outline

In the NCAP network as illustrated in FIG. 1, the **C-**plane function and U-plane function of the core network (CN) may be deployed as follows, for example.
- C-plane function of CN: in the network on the network operator side
- U-plane function of CN: in the NCAP 100 (or in the network on the NCAP 100 side)

As described above, the C-plane function and U-plane function may include the following processing.
- C-plane function: device registration/connection, management/retention/processing related to subscribers, subscriber (terminal) authentication processing, billing-related control, mobility management, session management
- U-plane function: connection with an IP (Internet Protocol) network, authentication processing, routing of IP packets, priority control

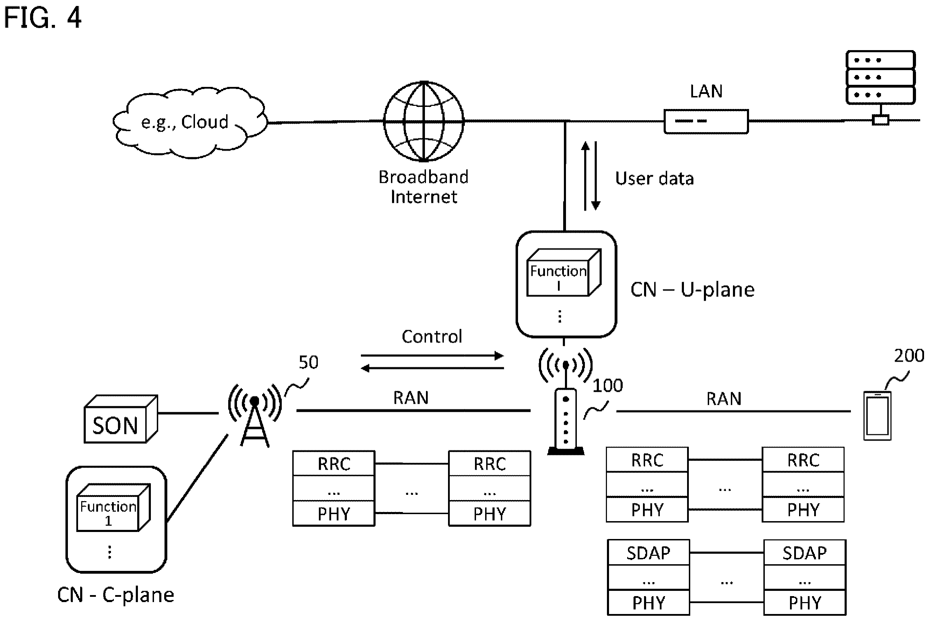

FIG. 4 illustrates a deployment example (part 1) of the C-plane function and the U-plane function of the CN in the mobile communication network configured using the NCAP 100.

As illustrated in FIG. 4, when the NCAP 100 connects to the network operator, a communication with the network on the network operator side may be performed via the RAN (using the RAT). Specifically, the exchange of information related to performing a connection between the NCAP 100, and the network operator on the network operator side (for example, the gNB 50, or AMF/SMF constituting the core network) may be performed by a radio communication with the gNB 50, or by a connection operation performed by the NCAP 100 as the UE.

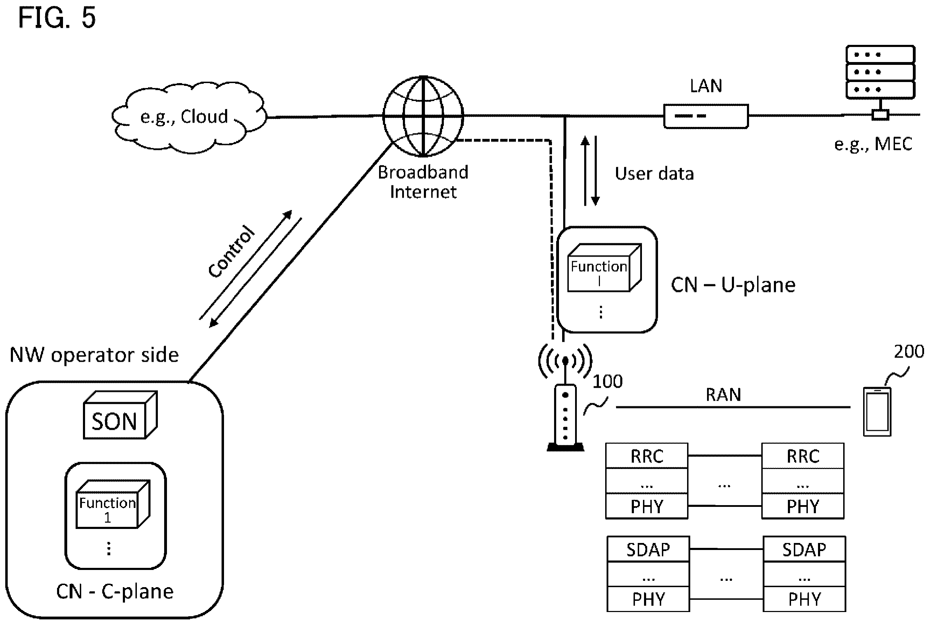

FIG. 5 illustrates a deployment example (part 2) of the C-plane function and the U-plane function of the CN in the mobile communication network configured using the NCAP 100. Specifically, when the NCAP 100 connects to the network operator, a communication with the network operator on the network operator side may be performed via the broadband Internet.

Even when the network architecture illustrated in FIGS. 4 and 5 is applied, the C-plane function of the CN (Function 1 in the figure) may be deployed in the network on the network operator side, and the U-plane function of the CN (Function I in the figure) may be deployed in the NCAP 100.

### (3.3) Operation example

### (3.3.1) Basic operation example

The NCAP 100 may receive the configuration information or the recommended information related to the NCAP network from the SON function (or SON mechanism) in the network on the network operator side, configure relevant parameters based on the information, and perform the optimization.

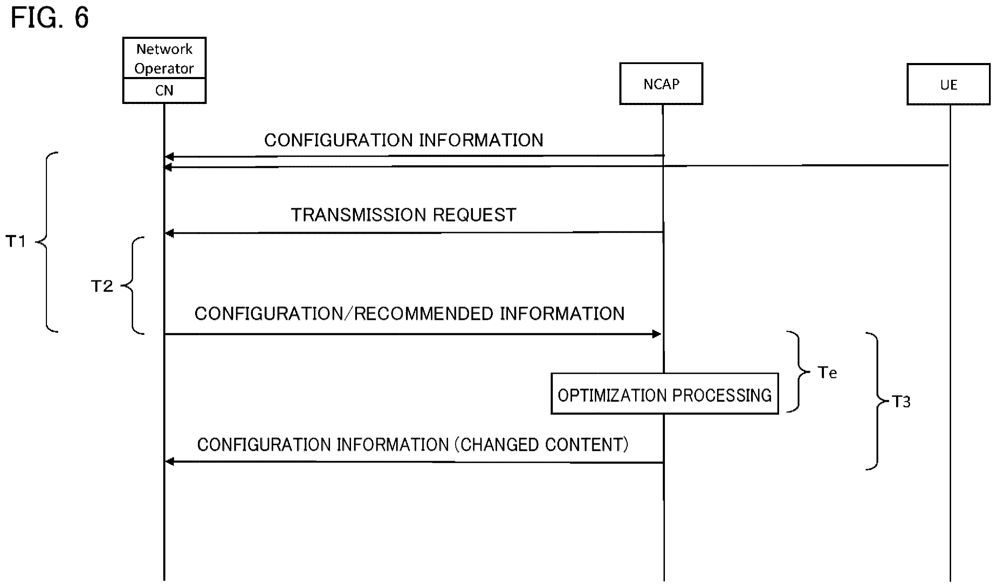

FIG. 6 is a diagram illustrating an example of a communication sequence related to an optimization of the NCAP network. The sequence illustrated in FIG. 6 illustrates a partial sequence related to the following operation example, and the order of the sequence may be changed as appropriate, or the sequence may be partially omitted.

The NCAP 100 may perform an optimization before performing an operation (specific operation) as a network device (NW device) accommodating the UE 200, or may perform an optimization while performing the specific operation. Here, the optimization may be performed repeatedly depending on the situation of the NCAP network, or performed periodically or irregularly.

This makes it possible for the network operator to perform an optimization of the NCAP network based on the values of various parameters indicated by the configuration information or the recommended information.

### (3.3.2) Operation example 1

The configuration information or the recommended information may be targeted for physical constituent elements. For example, regarding an antenna of the NCAP 100 (or UE 200), the following constituent elements are listed.
- Antenna (type, pattern, directivity, the number of elements, element spacing/arrangement, the number of panels, beam-forming capability (the number of beams, beam width, etc.)
- Directional direction, tilt angle, antenna height, power (maximum/minimum/particle size), gain, installation position
- New coverage area, absolute position and/or relative position of a coordination destination NCAP

By targeting such constituent elements, it is possible to configure, for example, which antenna element is used to use what kind of beam pattern. In addition, the information indicated by the configuration information or the recommended information may be a configuration value, or a difference from an applied value.

In addition, the configuration information or the recommended information may be targeted for non-physical constituent elements. For example, the radio parameters may be targeted, and the following parameters may be included.
- Freq/time/code-resource (band/band-combination/carrier-constituent element/signal-sequence/etc.)
- Carrier Aggregation/Dual Connectivity (CA/DC)
- Special Cell (SpCell), MCS (Modulation and Coding Scheme), rank
- Reference signal (DMRS/PTRS/SRS/CSIRS/PRS/TRS/etc.)
- Duplex operation (TDD/FDD/FD/etc.)
- beam management, beam failure recovery, prioritization, repetition
- Code Division Multiplexing (TD-OCC/FD-OCC/Cyclic Shift/etc.)
- SSB/PRACH configurations, numerology/waveform
- frequency-resource configurations (cell/band/FR/BWP/etc.)
- PDCCH configurations (search space/CORESET/DCI format/etc.)
- PUCCH configurations, PDSCH configurations, PUSCH configurations
- UE state, power saving (Discontinuous Reception (DRX), etc.), paging
- power control, measurement report, Handover (HO),
- RLM (Radio Link Monitoring )/RLF (Radio Link Failure), TA (Timing Advance)
- IoT/RedCap (Reduced UE Capability), cell reselection
- PHR (Power Headroom Report), slicing, QoS (Quality of Service) management, bearer, cell ID

The following parameters may be included in the service conditions.
- Service type (eMBB (enhanced Mobile Broadband) /URLLC (Ultra-Reliable and Low Latency Communications)/IoT/MBS (Multicast and Broadcast Services)/Positioning/Sensing/Power-transfer, etc.)
- Performance expected to be achieved (throughput (total or individual)/capacity (the number of devices accommodated, etc.)/power consumption (communication time, etc.)/reliability/latency/UE speed/UE device type)

For other NCAPs coordinating with NCAP 100, the parameters such as cooperation method, configurations or recommended contents for other NCAPs, and configurations for communication with other NCAPs, may be targeted.

Regarding the norms of parameter configuration and scheduling operation, any one of the following may be applied.
- Proportional Fair, Latency-aware
- Reported CSI (Channel State Information) in NCAP,

MCS for measured RSRP (Reference Signal Received Power), and other parameter decision norms

The configuration related to optimization may be per slice (network slice) or for each installation position. For the above parameters, the configuration value may be reported, or the difference from the applied value may be reported.

In addition, the NCAP 100 may assume that the value of the configuration information or the recommended information is configured within a range included in the applicable parameters reported from the NCAP 100 to the network operator.

### (3.3.3) Operation example 2

The NCAP 100 may receive the configuration information or the recommended information via any one of the following communication paths.
- BS (gNB 50) to NCAP
- BS to UE to NCAP
- BS to NCAP to NCAP

The BS (gNB 50) may be read as the network operator side. The configuration information or the recommended information may be notified individually for each NCAP or collectively for multiple NCAPs.

### (3.3.4) Operation example 3

The NCAP 100 may receive the configuration information or the recommended information using any one of the following operations.
- (a) Receive periodically
   Only the changed part may be notified, and if there is no change, the NCAP 100 may be notified that there is no change.
- (b) Receive at the timing required by a network operator
   That is, the NCAP 100 may be assumed to receive configuration information or recommended information before and/or while performing an operation (specific operation) as the network device accommodating the UE 200.
- (c) After reporting configuring information from the NCAP 100 and/or the UE 200, the NCAP 100 receives within a predetermined time T1 (see FIG. 6)
- (d) After transmitting a request for configuration information or recommended information from the NCAP 100 and/or UE 200, the NCAP 100 receives within a predetermined time T2 (see FIG. 6)
   This request may be a request related to another NCAP (for example, when interference from NCAP#1 to NCAP#2 is large, NCAP#2 requests a network operator to change the configuration of NCAP#1)
- (e) Receive together with a notification related to permission for execution/continuation of operation (specific operation) as the network device accommodating the UE 200
- (z) After receiving configuration information or recommended information, the NCAP 100 may complete a change of configuration within a predetermined time Te.

Here, T1/T2/Te may be defined in advance according to the specifications of the 3GPP, and may be notified from the network operator to the NCAP 100 as necessary.

### (3.3.5) Operation example 4

The NCAP 100 may report the received configuration information or recommended information to an upper layer. The upper layer may include at least one of the following:
- Media Access Control layer (MAC), Radio Link Control layer (RLC), Packet Data Convergence Protocol layer (PDCP), Service Data Adaptation Protocol layer (SDAP), Radio Resource Control layer (RRC)
- Core network function (for example, UPF)
- Application layer

The NCAP 100 may have a function of prompting a change of a physical constituent element based on the received recommended information. Further, the NCAP 100 may report information related to a changed constituent element (configuring information) to the network operator after changing the physical constituent element based on the recommended information. Alternatively, the NCAP 100 may simply notify the network operator of the completion of the change.

The network operator may assume that the parameter will be changed within a predetermined time T3 after the NCAP 100 receives the recommended information (see FIG. 6). If there is no notification within the time T3, it may mean that no change has been made. In addition, the NCAP 100 may report to the network operator that no change has been made after the time T3 has passed.

### (4) Operation and effect

According to the embodiment described above, the NCAP 100 can perform an optimization of the NCAP network based on the configuration information or the recommended information. Therefore, it is possible to perform an appropriate self-optimization of the NCAP network according to the intention of the network operator or the situation of the NCAP network.

### (5) Other embodiments

Although the embodiment has been described above, the present disclosure is not limited to the description of the embodiment, and it will be obvious to those skilled in the art that various modifications and improvements are possible.

For example, in the embodiment described above, although the NCAP 100 can connect to a server for MEC and the broadband Internet via a LAN, the LAN may be configured on the same segment, or a different LAN which is physically or logically separated may be used.

Further, in the embodiment described above, the NCAP 100 is connected to both the network (first communication network) and the LAN (second communication network) on the network operator side; however, the NCAP 100 may be connected to only one of the networks. Further, the UE 200 connected to the network constituted by the NCAP 100 may be connected separately to the radio base station on the network operator side, or may not be connected thereto. The operation of the NCAP 100 and/or the UE 200 may differ based on the presence or absence of the above connection. Here, a licensed band may be used or an unlicensed band may be used in the network constituted by the NCAP 100.

The block diagrams (FIGS. 2 and 3) used in the description of the above-described embodiment illustrate blocks in units of functions. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter, " and the like. The method for implementing each component is not particularly limited as described above.

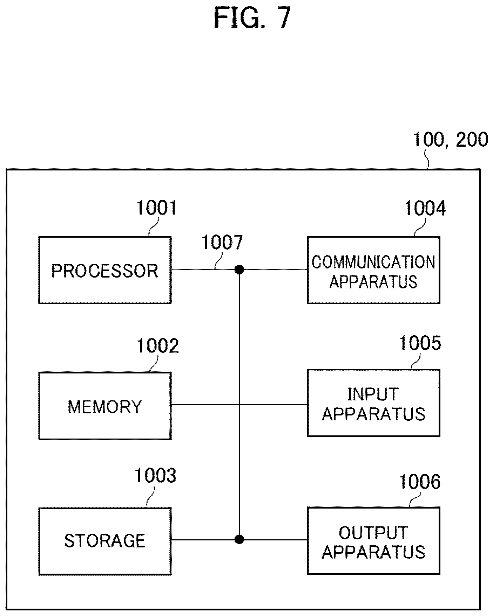

Further, the above-described NCAP 100 and UE 200 may function as a computer that performs processing of a radio communication method of the present disclosure. FIG. 7 is a diagram illustrating an example of a hardware configuration of NCAP 100 and UE 200. As illustrated in FIG. 7, NCAP 100 and UE 200 may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of NCAP 100 and UE 200 (FIGS. 2 and 3) is implemented by means of any of hardware elements of the computer device or a combination of the hardware elements.

Each function in NCAP 100 and UE 200 is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the device may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

Information or signals (information and the like) may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any of a one of various different technologies. For example, data, an instruction, a command, information, a signal, a bit, a symbol, a chip, or the like, described throughout the present application, may be represented by a voltage, an electric current, electromagnetic waves, magnetic fields, magnetic particle, optical fields, a photon, or a combination thereof.

It should be noted that a term used in the present specification and/or term required for understanding of the present specification may be replaced by a term having the same or similar meaning. For example, a channel and a symbol may be a signal (signaling). Further a signal may also be a message. Further, the component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed using absolute values, relative values from a predetermined values, or they may be expressed using corresponding different information. For example, a radio resource may be what is indicated by an index.

The names used for the parameters described above are not used as limitation. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell, " a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells (also called sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a mobile station (hereinafter, a user terminal). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, mobile stations may have the functions of the base stations described above. The words such as "uplink" and "downlink" may be interpreted as the words corresponding to the terminal-to-terminal communication (for example, "side"). For example, an uplink channel, a downlink channel and so on may be interpreted as a sidelink channel (or sidelink).

Likewise, the mobile station in the present disclosure may be interpreted as base station. In this case, the base station may have the functions of the mobile station described above.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

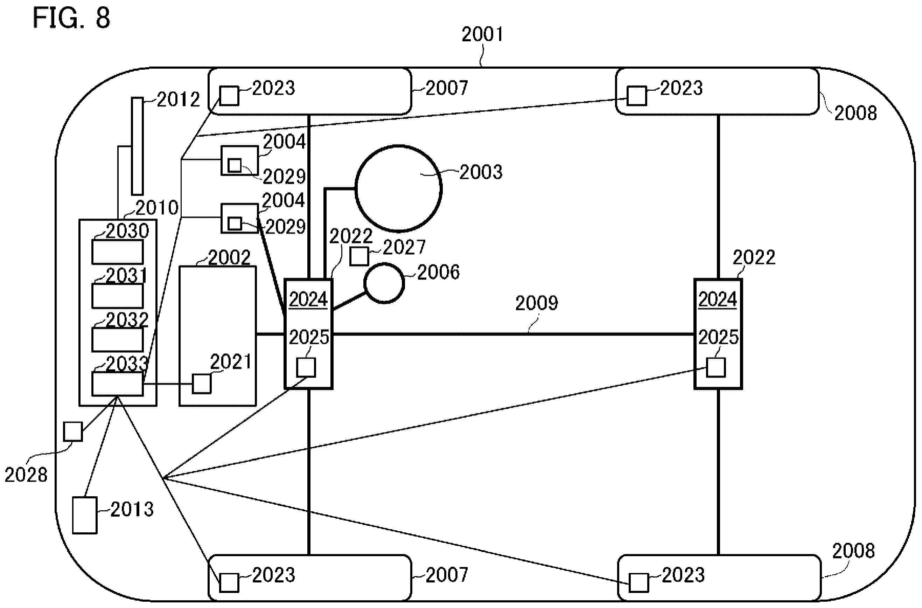

FIG. 8 shows a configuration example of a vehicle 2001. As shown in FIG. 8, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user. The electronic control unit 2010 includes a microprocessor 2031, a memory (ROM, RAM) 2032, and a communication port (IO port) 2033. The electronic control unit 2010 receives signals from the various sensors 2021-2027 provided in the vehicle. The electronic control unit 2010 may be referred to as an ECU (Electronic control unit) .

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

### (Supplementary note)

The disclosure described above may be expressed as follows. A first feature is a communication device including: a communication unit that performs a communication with a first communication network and a second communication network, and a radio communication with a terminal; and a control unit that performs an optimization of a specific communication network based on configuration information or recommended information related to a configuration of the specific communication network to be constructed using the communication unit.

A second feature is that in the first feature, the control unit performs the optimization based on the configuration information or the recommended information related to a physical constituent element in the specific communication network.

A third feature is that in the first or second feature, the control unit performs the optimization based on the configuration information or the recommended information targeted for a single communication device or multiple communication devices.

A fourth feature is that in the first to third features, the control unit is assumed to receive the configuration information or the recommended information from the first communication network within a specific time after reporting configuring information indicating a configuration of the specific communication network from the communication device or the terminal, or after requesting the configuration information or the recommended information from the communication device or the terminal.

A fifth feature is that in the first to fourth features, the control unit reports configuring information related to a changed constituent element to the first communication network after changing a configuration associated with the optimization.

### Reference Signs List

- 10: Radio communication system
- 50: gNB
- 100: NCAP
- 110: First communication unit
- 120: Second communication unit
- 130: Third communication unit
- 140: Control unit
- 200: UE
- C1: Cell
- 1001: Processor
- 1002: Memory
- 1003: Storage
- 1004: Communication device
- 1005: Input device
- 1006: Output device
- 1007: Bus
- 2001: Vehicle
- 2002: Drive unit
- 2003: Steering unit
- 2004: Accelerator pedal
- 2005: Brake pedal
- 2006: Shift lever
- 2007: Left and right front wheels
- 2008: Left and right rear wheels
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port

## Claims

1. A communication device comprising:
a communication unit that performs a communication with a first communication network and a second communication network, and a radio communication with a terminal; and
a control unit that performs an optimization of a specific communication network based on configuration information or recommended information related to a configuration of the specific communication network to be constructed using the communication unit.

2. The communication device according to claim 1,
wherein
the control unit performs the optimization based on the configuration information or the recommended information related to a physical constituent element in the specific communication network.

3. The communication device according to claim 1,
wherein
the control unit performs the optimization based on the configuration information or the recommended information targeted for a single communication device or multiple communication devices.

4. The communication device according to claim 1,
wherein
the control unit is assumed to receive the configuration information or the recommended information from the first communication network within a specific time after reporting configuring information indicating a configuration of the specific communication network from the communication device or the terminal, or after requesting the configuration information or the recommended information from the communication device or the terminal.

5. The communication device according to claim 1,
wherein
the control unit reports configuring information related to a changed constituent element to the first communication network after changing a configuration associated with the optimization.

6. A communication method comprising:
a step of performing a communication with a first communication network and a second communication network, and a radio communication with a terminal; and
a step of performing an optimization of a specific communication network based on configuration information or recommended information related to a configuration of the specific communication network to be constructed using the communication unit.
